# EUROPÄISCHE PATENTSCHRIFT

(11) **EP 1 127 481 B1**
(45) Veröffentlichungstag und Bekanntmachung des Hinweises auf die Patenterteilung: **25.08.2004**
(21) Anmeldenummer: 01104002.9
(22) Anmeldetag: 20.02.2001
(51) Int. Cl.: A01B 39/22

(54) **Fingerhacke mit mechanischem Antrieb zur Unkrautbeseitigung**
Mechanically driven finger weeder
Roue à doigts de sarclage entrainé mécaniquement

(30) Priorität: 22.02.2000 DE 10008146
(43) Veröffentlichungstag der Anmeldung: 29.08.2001
(73) Patentinhaber: Kress & Co. GmbH, 71732 Ludwigsburg-Tamm (DE); Machinefabriek Steketee B.V., 4436 RE Oudelande (NL)
(72) Erfinder: Kirchhoff, Christian, 27809 Lehmwerder (DE)
(74) Vertreter: Voigt, Wolf-Rüdiger

(56) Entgegenhaltungen:
- DE-B- 2 810 221
- NL-C- 1 014 092
- US-A- 3 212 585
- US-A- 4 114 697
- US-A- 5 704 430

## Beschreibung

Die Erfindung betrifft eine Vorrichtung zur mechanischen Beikrautbekämpfung innerhalb einer oder mehrerer Kulturreihen gleichzeitig, wobei die Fingerhackenwerkzeuge paarweise an einem Geräteträger angeordnet sind, der wiederum mit einem Ackerschlepper fest verbunden ist.

Mit der Erfindung wird eine Vorrichtung beschrieben, die vorwiegend im chemiefreien Landbau zur Pflege von Gemüse- und Sonderkulturen sowie auch in forstwirtschaftlichen Anpflanzungen bei der Anzucht von Junggehölzen eingesetzt wird.

Es wird möglich, die Bodenbearbeitung von der Reihenmitte in die unmittelbare Nähe der Kulturpflanzen zu tragen, wodurch der Vegetationsvorsprung derselben stets erhalten bleibt. Die Erfindung stellt keine Kombination bekannter einzelner Komponenten herkömmlicher Landtechnik dar, sondern es zeigt sich, daß die in der Summe gebrachten Vorschläge zu neuen Effekten führen.

Zur Pflege von jungen Gemüse- und Gehölzanpflanzungen sowie auch von Arznei- und Gewürzpflanzenkulturen gibt es eine Reihe technischer Lösungen, die sich mehr oder weniger bewährt haben und den Weg der mechanisierten oder thermischen Unkrautbeseitigung beschreiten.

In einschlägiger Fachliteratur, wissenschaftlichen Beiträgen und in Patentschriften (siehe z.B. US-A-3212585) sind dazu Vorschläge unterbreitet worden, aus denen einige nachfolgend beschrieben werden sollen.

Gemäß der US-Patentschrift 2 912 055 werden an einem verfahrbaren Grundrahmen paarweise zueinander angeordnet bodengetriebene, kreisförmige Unkrautjäter fest angebracht. An einer Grundplatte befinden sich an deren Umfang höhenverstellbare, in u-förmiger Weise gebogene Jätefinger, die am Ende konisch auseinanderstrebende und flexible Teilstücke aufweisen. Jeweils dahinter greifen mehr oder weniger parallel geführte metallene Stifte senkrecht als Antrieb in den Boden ein.

Die Befestigung der Werkzeuganordnung insgesamt läßt darauf schließen, daß eine Bodenbearbeitung lediglich in Anpflanzungen mit leichten Böden sinnvoll sein kann, da sonst Verformungen und Instabilität der Werkzeuge zu befürchten ist. Ein federnder Ausgleich bei Bodenunebenheiten oder dem Auftreffen auf Steine im Boden ist nicht vorgesehen, und es läßt die kompakte Bauweise des Grundrahmens keine Verstellmöglichkeit hinsichtlich einer Höhenregulierung erkennen.

Eine Weiterentwicklung zur o. g. Lösung wird im US-Patent 3 082 829 beschrieben. Die Jätefinger sind auch hier an der Peripherie einer Grundplatte, einmal ohne und zum anderen mit Bodenantriebselementen kombiniert, fest verschraubt. In der ersten Ausführung haben die Jätefinger eine verlängerte flexible Ausbildung. Es ist vorgesehen, daß der Anstellwinkel der paarweise geführten, kreisförmigen Werkzeuge veränderlich einstellbar ist und Bodenunebenheiten durch integrierte flexible Elemente in der Aufhängung begrenzt Rechnung getragen wird.

Als zusätzlichen Effekt bietet die Vorrichtung die Möglichkeit, daß durch geeignete nachgeführte Einrichtungen der bearbeitete Boden in Furchenform erhalten bleibt. Jedoch kann auch diese Konstruktion nur begrenzt, entsprechend der vorzuführenden Bodenstruktur. eingesetzt werden, da der mechanischen Beanspruchbarkeit der einzelnen Elemente eindeutig Grenzen gesetzt sind.

Es ist daher Aufgabe der Erfindung, die mit den vorbeschriebenen Lösungen des Standes der Technik verbundenen Nachteile zu überwinden und besonders darauf abzustellen, daß eine universelle Nutzung für alle Bodenarten erreicht wird sowie möglichem Verschleiß an den Bodenbearbeitungswerkzeugen dadurch Rechnung getragen wird, daß im Rahmen einer baukastenartigen Konzeption hohe Gebrauchseigenschaften erreicht werden.
Weitere im Sinne der Aufgabenstellung erzielbare Effekte stellen insbesondere dar:
- technologisch verbesserte Herstellungseise bei optimalem Materialeinsatz und leichter Handhabbarkeit.
- gute Kombination mit anderen Geräten, wie z. B. Scharhackgeräten und Geräten, die im Zwischenachsbau mitgeführt werden.
- Schonendes Arbeiten in den Kulturreihen in unmittelbarer Nähe der Pflanzen/Stecklinge beiderseits, wobei mit gezielter Krustenbrechung der vorübergehende Jäteffekt unterstützt wird.

Erfindungsgemäß wird die Aufgabe wie folgt gelöst, wobei die grundlegenden erfinderischen Gedanken in den Patentansprüchen 1 und 2 niedergelegt sind. Die weitere Ausgestaltung der Erfindung ergibt sich aus den Patentansprüchen 3 bis 13.

Die in den zu pflegenden Kulturen eingesetzten Werkzeuge werden erfindungsgemäß paarweise gegenüberliegend angeordnet und über Zwischenhaltungen mit einem Grundrahmen verbunden. Letzterer wird in herkömmlicher Weise mit dem Geräteträger eines Ackerschleppers kombiniert.

Es soll die neuartige Ausbildung der Fingerhacke an sich sowie deren modifizierte Aufhängung näher beschrieben werden.

Die bodengetriebene Fingerhacke kann im wesentlichen in 2 Grundtypen gegliedert werden. Zum einen ist es möglich, eine kompakte Bauform als Variante 1 mit integrierten Bodenbearbeitungsstiften und angesetzten Jätefingern und zum anderen, nach dem Baukastenprinzip Variante 2 eine zerlegbare, verschleißgerecht aufgebaute Lösung anzubieten.

Im Fall der Variante 1 besteht die Fingerhacke aus einem gegossenen Körper der einseitig, senkrecht nach unten gerichtete Bodenantriebselemente in "klauenartiger" Ausbildung besitzt. wobei im darüberliegenden mittleren Bereich die aus gleichem Werkstoff bestehenden, aber schlanker und größerer Zahl vorhandenen Jätefinger positioniert sind. Diese Variante ist vor allem bei geringen Reihenabständen unter 40 cm einsetzbar.

Desgleichen ist es bei der Bearbeitung von steinigen oder schweren Böden angebracht, die Bodenantriebselemente in ihrer gegossenen Bauform als ein "unteres" kompaktes Bauteil in Metall und das darüber befindliche Bauteil mit den kreisförmig angeordneten Jätefingern. beispielsweise aus schlagfestem Kunststoff auszubilden. Beide separierbaren Teilkörper können dabei fest mitander verschraubt sein.

Die leichtgängige Drehbeweglichkeit des kompletten Fingerhackenwerkzeuges wird dadurch erreicht, indem staubdicht gekapselte ein- oder mehrere Wälzlager im oberen oder unteren Teil der als Variante 1 bezeichneten kompakten Bauform eingepaßt sind.

Im Gegensatz dazu sieht das Baukastenprinzip, im folgenden als Variante 2 zu bezeichnen vor, daß die äußerlich der Variante 1 ähnelnde Form zwar erhalten bleibt, aber eine "Auflösung" in konstruktive Einzelbauteile mit gleicher Funktion erfolgt.

Dabei ist vorgesehen, daß eine Dreiteilung der Fingerhacke in Werkzeugplatte für den Antrieb, mittlerer Platte mit den Jätefingern und Deckplatte für die Lagerung vorgenommen wird. Mit durchgängigen Verschraubungen können diese 3 Teilelemente der Variante 2 miteinander fixiert werden. Ensprechend auftretendem Verschleiß ist ein schneller Austausch möglich. Die Befestigung der Jätefinger wird hier im wesentlichen durch Einschrauben,klemmen oder Versplinten in die mittlere Platte erreicht. Es kann auch sinnvoll sein, die Jätefinger derart auswechselbar anzuordnen, indem die mittlere Platte Zapfen aufweist. Diese Zapfen dienen der auswechselbaren Aufnahme der Jätefinger. Da man die Jätefinger aus Kunststoff, Metall oder Kunststoff mit Metallkern ausführen kann, bleibt es der konstruktiven Ausführung vorbehalten, ob die o. g. Zapfen aus verschleißfestem Kunststoff oder anderen Material bestehen. (Es wäre auch denkbar gemäß Variante 1 bei einem gegossenen Körper statt der unlösbar verbundenen Jätefinger am gegossenen Grundkörper Zapfen vorzusehen, auf die dann Jätefinger - wie vorher dargelegt - angeordnet werden.) Es soll als Alternative auch ein segmentweiser Austausch der Jätefinger möglich sein. Letzterer ist, im Sinne einer kostengünstigen Instandhaltung, zusätzlich für die Antriebsplatte mit den klauenartigen Bodenantriebselementen vorgesehen.

Von wesentlicher Bedeutung ist, daß die Effektivität des Bodenantriebs und der Bodenbearbeitung durch variables Anpassen von Anzahl und Geometrie der Bodenantriebselemente und Jätefinger gesteigert werden kann.

Zum Schutz der Fingerhacke gegen Schlag- und Bruchgefahr befinden sich bei Bedarf an den Halterungen der Fingerhacke Dämpfungselemente (Stahlfeder, Silentblock oder ähnliche Bauelemente). Zur Höhenverstellung dicht an der Reihe können die Fingerhacken unmittelbar mit Schleifkufen versehen sein.

Die Erfindung soll schließlich an einem Ausführungsbeispiel in zweckmäßiger Art und Weise näher erläutert werden.

Dazu werden folgende Prinzipdarstellungen benötigt:
- Figur 1: Gesamtansicht entspricht Variante 1

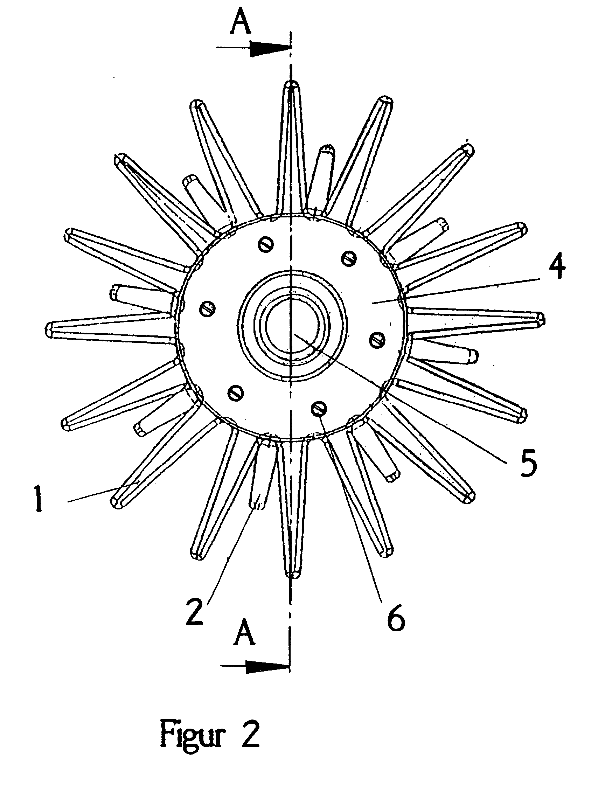

- Figur 2: Draufsicht (Variante 2)

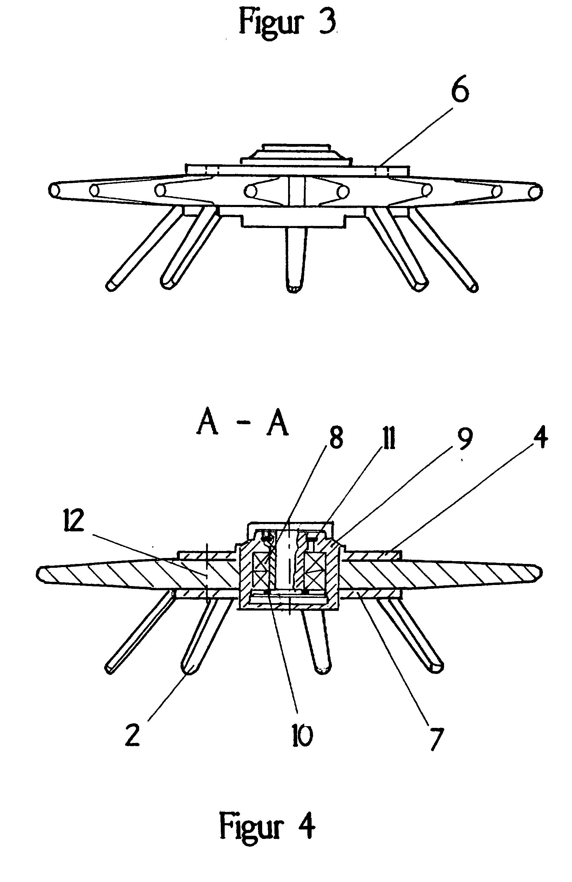

- Figur 3: Seitenansicht (Variante 2) nur sichtbare Kanten
- Figur 4: Schnitt A-A (Variante 2)

Die darin enthaltenen Bezugszeichen haben im einzelnen die Bedeutung:
- 1: Jätefinger
- 2: Bodenantriebselemente
- 3: integrierte Lagerung
- 4: Deckplatte
- 5: Lagersitz
- 6: Verschraubung
- 7: Werkzeugplatte für Antrieb
- 8: Wälzlager
- 9: Buchse
- 10: Sprengring
- 11: Wellendichtungsring
- 12: mittlere Platte

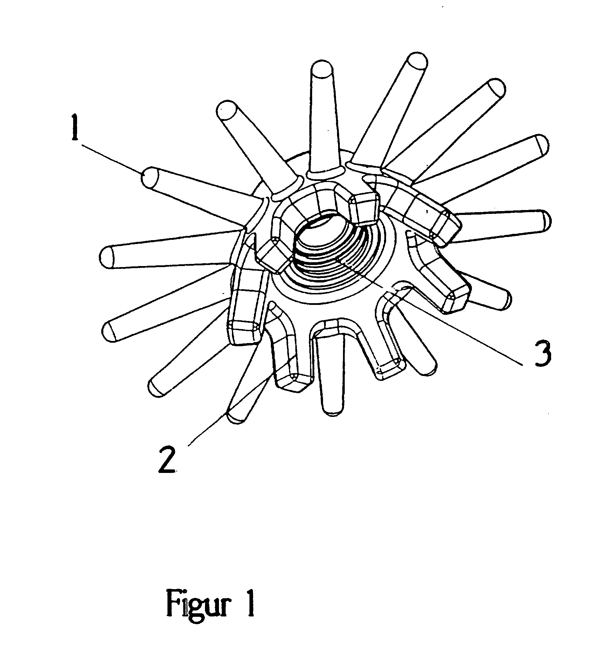

Die Figur 1 zeigt die Ausführung der Fingerhacke in kompakter Bauweise in gegossener Form, wobei Kunststoff (Polyurethan) oder Metallguß Verwendung findet. Dabei kann auch vorgesehen werden, daß die Bodenantriebselemente 2 mit der Werkzeugplatte für den Antrieb 7 eine Einheit bilden und mit der Platte, die die Jätefinger 1 trägt, fest verbunden ist. Diese Verbindung wird durch mehrfache Verschraubung 6 oder dadurch erreicht, daß die Bodenantriebselemente 2 mit ihrer "klauenartigen" Ausbildung als metallisches Bauteil in den mit den Jätefingern 1 versehene "Kunststoffstern" eingegossen sind. Diese Jätefinger 1 sind entsprechend der Bodenbeschaffenheit aus Kunststoff, Metall bzw. aus Kunsststoff mit Metallkern gefertigt und ggfs. einzeln oder segmentweise ersetzbar. Dieser Austausch ist auch bei den Bodenantriebselementen 2 durchführbar.

Zur Erhöhung der "Aggressivität" der Fingerhacke und zur Anwendung in gehäufelten Kulturen werden die Jätefinger 1 in zwei Ebenen angeordnet (nicht näher dargestellt), wobei die Jätefinger in den zwei Ebenen eine unterschiedliche Länge aufweisen.

In Verbindung mit dem segementweisem Austausch der Jätefinger 1 und Bodenantriebselemente 2 soll auch deren Anzahl variierbar sein.

Die kompakte Ausführung (Variante 1) kann konstruktiv und instandhaltungsgerecht in drei Hauptebenen "aufgelöst" werden, sodaß von der Werkzeugplatte für den Antrieb 7, einer mittleren Platte 12 mit den Jätefingern 1 und der Deckplatte 4 mit der Lagerung zu sprechen ist. In dieser Form, als Variante 2 zu bezeichnen, wird ein Baukastenprinzip verwirklicht. Beispielsweise befindet sich in der Deckplatte eine Lagerung aus einem oder mehreren Wälzlagern 8, die staubdicht und nässegeschützt gekapselt sind und mittels Sprengring 10 in der Buchse 9 positioniert werden. Die Abdichtung der Fingerhacke in Richtung Aufhängung übernimmt der Wellendichtungsring 11. Diese Lagerung kann jedoch auch in andere Ebenen eingepaßt werden.

Die Bodenantriebselemente 2 an der Werkzeugplatte für den Antrieb 7 werden für steinige und schwere Böden vorwiegend aus hochfestem, zähhartem Stahl oder Federstahl ausgebildet.

Als zusätzliche Maßnahmen zur Verbesserung des Verschleißschutzes befinden sich in den Vierkant-Rohr-Halterungen für die Finger-Hacke Dämpfungselemente, die ein seitliches elastisches Wegdrehen ermöglichen.

Zur Gewährleistung einer gleichmäßigen Bodenbearbeitungsstufe befinden sich neben der Fingerhacke gefederte und höhenregulierbare Stützräder bzw. Schleifkurven. Letztere besitzen vorteilhafterweise eine schalenförmige Ausbildung.

Weiterhin ist von Vorteil, wenn die einzeln oder segmentweise wechselbaren Jätefigur 1 und Bodemmtriehselemente 2 in Abhängigkeit von der Bodenbschaffenheit geometrisch unterschiedlich geformt sind, um den Bodenantrieb und die -bearbeitung optimal zu gestalten. Bei einer Vergrößerung der Fläche der Bodenantriebselemente 2 quer zur Fahrtrichtung wird die Antriebswirkung erhöht.

## Patentansprüche

1. Fingerhacke zur Unkrautbeseitigung, mit mechanischem Antrieb durch Bodenantriebselemente und mit einem darüber angeordneten, die Jätefinger (1) aufnehmenden Bereich, **gekennzeichnet dadurch,**
**daß** die Bodenantriebselemente (2) klauenartig ausgebildet, einseitig nach unten gerichtet, und kompakt sind, und mit einer Werkzeugplatte für den Antrieb (7) eine Einheit in Form eines gegossenen Bauteils bilden,
und **daß** diese Einheit mit dem die Jätefinger aufnehmenden Bereich, der gleichzeitig mit einer integrierten Lagerung (3) ausgestattet ist, fest verbunden ist.

2. Fingerhacke zur Unkrautbeseitigung, mit mechanischem Antrieb durch Bodenantriebselemente und mit einem darüber angeordneten, die Jätefinger (1) aufnehmenden Bereich, **gekennzeichnet dadurch,**
**daß** in Abweichung von Anspruch 1 die Fingerhacke eine aufgelöste Bauweise nach dem Baukastenprinzip aufweist, indem die Fingerhacke aus einer Werkzeugplatte (7) mit klauenartig ausgebildeten, einseitig nach unten gerichteten Bodenantriebselementen (2), einer darüber angeordneten mittleren Platte (12) mit Jätefingern (1) und einer Deckplatte (4) mit Lager besteht.

3. Fingerhacke mit mechanischem Antrieb nach Anspruch 1, **gekennzeichnet dadurch, dass** die Jätefinger (1) aus einem Werkstoffverbund bestehen, wobei die Jätefmger (1) zweckmäßigerweise aus Stahl bestehen, die mit Polyuretan umhüllt sind.

4. Fingerhacke mit mechanischem Antrieb nach Anspruch 1 und 2, **gekennzeichnet dadurch, dass** im Bereich der Aufnahme der Jätefinger (1) Zapfen angeordnet sind, auf denen lösbar die Jätefinger (1) plaziert sind.

5. Fingerhacke mit mechanischem Antrieb nach Anspruch 2, **gekennzeichnet dadurch, dass** die Bodenantriebselemente (2) nebst Werkzeugplatte für den Antrieb (7) aus verschleißfestem Material, wie Polyurethan, Metallguss bzw. Federstahl bestehen.

6. Fingerhacke mit mechanischem Antrieb nach Anspruch 2, **gekennzeichnet dadurch, dass** die Bodenantriebselemente (2) nebst Werkzeugplatte (7) für den Antrieb allein ohne mittlere Platte (12), Deckplatte (4) und Lagerung austauschbar sind.

7. Fingerhacke mit mechanischem Antrieb nach Anspruch 2, **gekennzeichnet dadurch, dass** die Bodenantriebselemente (2) in Anzahl und Geometrie variierbar in die Werkzeugplatte für den Antrieb (7) integrierbar sind.

8. Fingerhacke mit mechanischem Antrieb nach Anspruch 2, **gekennzeichnet dadurch, dass** die Werkzeugplatte durch den Antrieb (7), die mittlere Platte (12) nebst Jätefingern (1) und die Deckplatte (4) miteinander verschraubt sind, wob ei einzeln und segmentweise ein Austausch der Bodenantriebselemente (2) und Jätefinger (1) möglich ist.

9. Fingerhacke mit mechanischem Antrieb nach Anspruch 1, 3 und 8, **gekennzeichnet dadurch**, das der Lagersitz (5) mit den Wälzlagern (8) in einer der Platten (4, 7, 12) eingepaßt werden kann.

10. Fingerhacke mit mechanischem Antrieb nach Anspruch 1 und 2, **gekennzeichnet dadurch, daß** zwei Kränze mit Jätefingern (1) in axialer Richtung der Fingerhacke übereinander angeordnet sind, wobei die Jätefinger (1) je Kranz eine gleiche oder unterschiedliche Länge aufweisen.

11. Fingerhacke mit mechanischem Antrieb nach Anspruch 1 und 2, **gekennzeichnet dadurch, daß** Schleifkufen und/oder Stützräder zur Höhenführung unter oder direkt vor oder nach der Werkzeugplatte (7) montiert sind.

12. Fingerhacke mit mechanischem Antrieb nach Anspruch 1, 2 und 10, **gekennzeichnet dadurch, daß** die Schleifkufen auch durch Stützräder in unmittelbarer Nähe der Fingerhacke ersetzbar sind.

13. Fingerhacke mit mechanischem Antrieb nach Anspruch 1 und 2 **gekennzeichnet dadurch, daß** oberhalb der Deckplatte (4) eine Halterung auf federnden Dämpfungselementen den Übergang zu einem höhenverstellbaren Geräteträger bildet.

## Claims

1. Finger-type rotary hoe for weed control, mechanically driven through ground driving elements, with an area arranged above the latter to accommodate the weeding fingers (1), **characterized in that** the ground driving elements (2) are compact claw-like shaped items pointing downward on one side that incorporate a tool mounting plate for the driving mechanism (7) to form an integrated whole in form of a shaped casting, which is firmly connected with the weeding-finger-accommodating area which at the same time is equipped with an integrated bearing (3).

2. Finger-type rotary hoe for weed control, mechanically driven through ground driving elements, with an area arranged above the latter to accommodate the weeding fingers (1), **characterized in that** - by way of derogation from Claim 1 - the finger-type rotary hoe has a unitized, modular design where the finger-type rotary hoe consists of a tool mounting plate (7) with claw-like shaped ground driving elements (2) pointing downward on one side, and an intermediate plate (12) arranged above the latter with weeding fingers (1) as well as a cover plate (4) with bearing.

3. Mechanically driven finger-type rotary hoe according to Claim 1 **characterized in that** the weeding fingers (1) are made from a composite material where the weeding fingers (1) as such are suitably made of steel with a polyurethane cladding.

4. Mechanically driven finger-type rotary hoe according to Claims 1 and 2 **characterized in that** the area that accommodates the weeding fingers (1) has cogs on which the weeding fingers (1) are placed so that they can easily be detached.

5. Mechanically driven finger-type rotary hoe according to Claim 2 **characterized in that** the ground driving elements (2) as well as the tool mounting plate for the driving mechanism (7) are made of abrasionproof material such as polyurethane, cast metal and/or spring steel.

6. Mechanically driven finger-type rotary hoe according to Claim 2 **characterized in that** the ground driving elements (2) together with the tool mounting plate (7) for the driving mechanism can be replaced without the need of replacing the intermediate plate (12) and the cover plate (4) with the bearing at the same time.

7. Mechanically driven finger-type rotary hoe according to Claim 2 **characterized in that** the ground driving elements (2), as regards their number and geometry, can be variably integrated in the tool mounting plate for the driving mechanism (7).

8. Mechanically driven finger-type rotary hoe according to Claim 2 **characterized in that** the tool mounting plate is screwed through the driving mechanism (7) together with the intermediate plate (12) plus weeding fingers (1) and the cover plate (4), where the ground driving elements (2) and the weeding fingers (1) can be replaced individually segment by segment.

9. Mechanically driven finger-type rotary hoe according to Claims 1, 3 and 8 **characterized in that** the bearing seat (5) together with the antifriction bearings (8) can be fitted into one of the plates (4, 7, 12).

10. Mechanically driven finger-type rotary hoe according to Claims 1 and 2 **characterized in that** there are two rings arranged one above the other in axial direction seen from the finger-type rotary hoe that are equipped with weeding fingers (1), where the weeding fingers (1) on each ring may be different or similar in length.

11. Mechanically driven finger-type rotary hoe according to Claims 1 and 2 **characterized in that** skids and/or supporting castor wheels as vertical guiding devices are installed underneath the tool mounting plate (7), or right in front or behind the same.

12. Mechanically driven finger-type rotary hoe according to Claims 1, 2 and 10 **characterized in that** the skids may be replaced with supporting castor wheels arranged immediately on the finger-type rotary hoe's perimeter.

13. Mechanically driven finger-type rotary hoe according to Claims 1 and 2 **characterized in that** a fixing device on spring dampers, which is arranged above the cover plate (4), is used as transition to a height-adjustable tool carrier.

## Revendications

1. Sarcleuse à doigts pour le désherbage, avec entraînement mécanique par éléments moteurs et un autre secteur placé au-dessus portant les doigts de sarcleuse (1), **caractérisée par le fait, que** les éléments moteurs (2) sont en forme de griffes, sont dirigées unilatéralement vers le bas et sont compacts, et forment avec une plaque à outils pour l'entraînement (7) une unité sous forme de pièce coulée, et que cette unité est fermement reliée avec le secteur portant les doigts de sarcleuse, lequel est équipé d'un logement (3) incorporé.

2. Sarcleuse à doigts pour le désherbage, avec entraînement mécanique par éléments moteurs et un autre secteur placé au-dessus portant les doigts de sarcleuse (1), **caractérisée par le fait, que** différemment de la revendication 1 la sarcleuse à doigts présente un mode de construction en éléments démontables selon lequel la sarcleuse à doigts est constituée de la plaque à outils (7) portant les éléments moteurs (2) sous forme de griffes dirigées unilatéralement vers le bas, d'une plaque médiane (12) avec doigts de sarclage (1) disposée par-dessus et d'une plaque de couverture (4) avec le logement.

3. Sarcleuse à doigts avec entraînement mécanique selon revendication 1, **caractérisée par le fait que** les doigts de sarcleuse (1) sont constitués de matériaux composites, les doigts de sarcleuse (1) étant comme il convient en acier recouvert de polyuréthane.

4. Sarcleuse à doigts avec entraînement mécanique selon revendications 1 et 2, **caractérisée par le fait que** dans le domaine de la fixation des doigts de sarcleuse (1) sont disposés des tenons sur lesquels les doigts de sarcleuse (1) prennent place de manière amovible.

5. Sarcleuse à doigts avec entraînement mécanique selon revendication 2, **caractérisée par le fait que** les éléments moteurs (2) ainsi que la plaque à outils (7) pour l'entraînement sont constitués de matériaux différents résistants à l'usure comme le polyuréthane, la fonte métallique et l'acier à ressorts.

6. Sarcleuse à doigts avec entraînement mécanique selon revendication 2, **caractérisée par le fait que** les éléments moteurs (2) ainsi que la plaque à outils (7) pour l'entraînement sont eux seuls échangeables sans la plaque médiane (12), la plaque de couverture (4) et le logement.

7. Sarcleuse à doigts avec entraînement mécanique selon revendication 2, **caractérisée par le fait que** les éléments moteurs (2) peuvent être intégrés de manière variable en nombre et en forme dans la plaque à outils pour l'entraînement (7).

8. Sarcleuse à doigts avec entraînement mécanique selon revendication 2, **caractérisée par le fait que** la plaque à outils (7) par l'entraînement, la plaque médiane (12) avec les doigts de sarcleuse (1) et la plaque de couverture (4) sont vissées ensemble, bien qu'il soit possible d'échanger pièce par pièce ou segment par segment les éléments moteurs (2) et les doigts de sarcleuse (1).

9. Sarcleuse à doigts avec entraînement mécanique selon les revendications 1, 3, et 8, **caractérisée par le fait que** le logement (5) avec les roulements (8) peut être ajusté dans une des plaques (4, 7, 12).

10. Sarcleuse à doigts avec entraînement mécanique selon les revendications 1 et 2, **caractérisée par le fait que** deux couronnes avec les doigts de sarcleuse (1) sont disposées l'une sur l'autre dans le sens axial de la sarcleuse, les doigts de sarcleuse (1) de chaque couronne ayant une longueur égale ou différente.

11. Sarcleuse à doigts avec entraînement mécanique selon les revendications 1 et 2, **caractérisée par le fait que** les patins de glissement et/ ou les roues d'appui sont montés en dessous ou directement devant ou derrière la plaque à outils (7) pour la commande verticale.

12. Sarcleuse à doigts avec entraînement mécanique selon les revendications 1, 2 et 10, **caractérisée par le fait que** les patins de glissement peuvent être remplacés par des roues d'appui à proximité immédiate de la sarcleuse à doigts.

13. Sarcleuse à doigts avec entraînement mécanique selon les revendications 1 et 2, **caractérisée par le fait qu'**au-dessus de la plaque de couverture (4) une fixation sur éléments amortisseurs faisant ressort forme le passage vers un porte-appareils ajustable en hauteur.
